# DEMANDE DE BREVET EUROPEEN

(11) **EP 1 235 141 A1**
(43) Date de publication de la demande: **28.08.2002**
(21) Numéro de dépôt: 02290426.2
(22) Date de dépôt: 21.02.2002
(51) Int. Cl.: G06F 9/38

(54) **Procédé de gestion d'instructions gardées au sein d'un processeur, et processeur correspondant**

(30) Priorité: 27.02.2001 FR 0102646
(71) Demandeur: STMicroelectronics S.A., 92120 Montrouge (FR)
(72) Inventeur: Alofs, Thomas, 38100 Grenoble (FR); Cofler, Andrew, 38340 Voreppe (FR)
(74) Mandataire: Casalonga, Axel

(57) **Abrégé**

L'unité de traitement DU qui contient le registre des indications de garde, est associée à une première mémoire SNDGQ du type FIFO et à une deuxième mémoire DIDQ du type FIFO. Chaque instruction de transmission SNDGx destinée à transmettre la valeur d'une indication de garde est stockée dans la première mémoire SNDGQ. Toutes les autres instructions sont stockées dans la deuxième mémoire DIDQ. Une instruction de transmission SNDGx peut court-circuiter les autres instructions si aucune instruction stockée dans la deuxième mémoire et temporellement plus ancienne n'est de nature à modifier la valeur de l'indication de garde associée à cette instruction de transmission SNDGx.

Application à un processeur de traitement numérique du signal.

## Description

L'invention concerne les processeurs, notamment les processeurs de traitement numérique du signal (DSP : "Digital Signal Processors" en langue anglaise), et plus particulièrement la gestion d'instructions gardées au sein d'un tel processeur.

Un processeur concerné par la présente invention comporte généralement plusieurs unités de traitement fonctionnant en parallèle. Classiquement, il est prévu en tant qu'unités de traitement, un module arithmétique et logique, un module d'adressage et un module de gestion de branchement. Outre ces unités de traitement, le processeur comporte généralement une unité de contrôle qui dialogue avec la mémoire-programme et délivre aux différentes unités de traitement, des instructions élémentaires encore communément appelées micro-instructions.

Parmi les instructions délivrées aux unités de traitement, figurent des instructions dites "gardées" permettant une écriture plus performante du code programme.

L'utilisation d'instructions gardées dans un processeur est déjà connue de l'homme du métier, par exemple par la demande de brevet européen n° 1 050 803. On rappelle ici brièvement le principe des instructions gardées, l'homme du métier pouvant se référer pour plus de détails, si nécessaire, à la demande de brevet européen précitée.

Une instruction gardée est une instruction affectée d'une indication dite "de garde", en pratique un bit de garde pouvant prendre la valeur 0 ou 1. L'instruction gardée sera alors exécutée ou non en fonction de la valeur du bit de garde, c'est-à-dire de l'indication de garde. Toutes les valeurs binaires des indications de garde, pouvant être au nombre de seize par exemple, sont contenues dans un registre dit "registre d'indications de garde". Ce registre centralisé est incorporé au sein d'une unité de traitement, par exemple l'unité arithmétique et logique, et contient à chaque instant les valeurs courantes des indications ou bits de garde. Les valeurs de ces indications de garde peuvent être modifiées par des instructions spécifiques dites "instructions modificatrices".

Pour lire la valeur d'une indication de garde associée à une instruction gardée, l'unité de traitement qui reçoit cette instruction gardée et qui n'a pas un accès direct au registre des indications de garde (par exemple l'unité de branchement), requiert un transfert de la valeur de l'indication de garde depuis l'unité de traitement qui détient le registre des indications de garde. En d'autres termes, la délivrance d'une instruction gardée à une unité de traitement qui ne détient pas le registre des indications de garde, provoque la délivrance à l'unité de traitement qui est la gardienne du registre des indications de garde, d'une instruction dite "de transmission" qui est destinée à faire transmettre à l'unité de traitement qui reçoit l'instruction gardée, la valeur de l'indication de garde associée à cette instruction gardée.

Et, l'instruction gardée est maintenue dans l'étage de tête (étage de sortie) de la mémoire d'instructions du type FIFO (premier entré-premier sorti), associée à cette unité de traitement, jusqu'à ce que cette dernière reçoive de l'unité de traitement qui détient le registre des indications de garde, ladite valeur de l'indication de garde associée à cette instruction gardée. Ce n'est que lorsque l'unité de traitement qui détient le registre des indications de garde, aura exécuté l'instruction de transmission, que la valeur correspondante de l'indication de garde sera transmise à l'unité de traitement requérante, de façon que celle-ci puisse ou non exécuter son instruction gardée.

Or, si pour une raison ou pour une autre, l'instruction de transmission est bloquée dans la mémoire d'instructions de l'unité de traitement qui détient le registre des indications de garde, l'unité de traitement requérante va être en conséquence également bloquée jusqu'à ce qu'elle reçoive la valeur de l'indication de garde correspondante.

L'invention vise à apporter une solution à ce problème.

L'invention a pour but de proposer un mécanisme de gestion des instructions gardées totalement différent de celui existant jusqu'à maintenant, et qui puisse améliorer les performances générales d'un processeur utilisant un registre centralisé des indications de garde.

L'invention propose donc un procédé de gestion d'instructions gardées au sein d'un processeur, ce processeur comportant plusieurs unités de traitement respectivement associées à des moyens de mémoire du type FIFO (premier entré-premier sorti) pour stocker séquentiellement les instructions respectives qui sont destinées aux unités correspondantes. Une première unité, par exemple une unité arithmétique et logique, contient un registre d'indications de garde. Par ailleurs, la délivrance d'une instruction gardée au moyen de mémoire d'une deuxième unité de traitement, par exemple l'unité de branchement ou bien l'unité d'adressage, provoque la délivrance au moyen de mémoire de la première unité de traitement, d'une instruction dite "de transmission" destinée à faire transmettre à la deuxième unité, la valeur de l'indication de garde associée à ladite instruction gardée.

Selon une caractéristique générale de l'invention, le moyen de mémoire de la première unité comporte une première mémoire de type FIFO, et une deuxième mémoire de type FIFO distincte de la première. On stocke chaque instruction de transmission dans la première mémoire et toutes les autres instructions destinées à la première unité de traitement, dans la deuxième mémoire. Ces autres instructions peuvent être des instructions "modificatrices" destinées à modifier des valeurs d'indications de garde, ou bien toute autre instruction à l'exception d'une instruction de transmission.

On extrait alors de la première mémoire, une instruction de transmission ayant atteint la tête de cette première mémoire, si aucune instruction modificatrice temporellement plus ancienne destinée à modifier la valeur de l'indication de garde associée à cette instruction de transmission, n'est présente dans la deuxième mémoire. Et, en présence d'une telle instruction modificatrice temporellement plus ancienne dans la deuxième mémoire, on extrait l'instruction de transmission de la première mémoire seulement après que l'instruction modificatrice a été extraite de la deuxième mémoire.

En d'autres termes, selon l'invention, une instruction de transmission peut "court-circuiter" toutes les autres instructions si aucune instruction temporellement plus ancienne stockée dans la deuxième mémoire n'est de nature à modifier la valeur de l'indication de garde associée à cette instruction de transmission.

Selon un mode de mise en oeuvre du procédé selon l'invention, à chaque fois qu'on extrait une instruction de la deuxième mémoire, on incrémente un compteur de lecture. De même, à chaque fois qu'on stocke une instruction dans la deuxième mémoire, on incrémente un compteur d'écriture.

Par ailleurs, à chaque fois qu'on stocke dans la deuxième mémoire une instruction modifiant la valeur d'une indication de garde, on mémorise la valeur courante du compteur d'écriture. Et, la détermination du caractère toujours présent d'une instruction modificatrice dans la deuxième mémoire prend en compte le résultat de la comparaison de ladite valeur courante mémorisée du compteur d'écriture avec la valeur courante du compteur de lecture.

En d'autres termes, on détermine si une instruction modificatrice qui a été écrite dans la deuxième mémoire est toujours présente dans cette deuxième mémoire, en utilisant la comparaison de la valeur courante mémorisée du compteur d'écriture avec la valeur courante du compteur de lecture.

En pratique, le compteur de lecture et le compteur d'écriture ont avantageusement une taille binaire identique égale à la profondeur de la deuxième mémoire. On associe alors, selon un mode de mise en oeuvre du procédé, à chaque compteur, un bit de dépassement changeant de valeur à chaque fois que le compteur correspondant revient à sa valeur initiale. Et, à chaque fois qu'on stocke dans la deuxième mémoire une instruction modifiant la valeur d'une indication de garde, on mémorise également la valeur courante du bit de dépassement du compteur d'écriture. Et, afin de tenir compte du fait que le pointeur de lecture et le pointeur d'écriture de la deuxième mémoire peuvent se situer dans deux fenêtres "circulaires" différentes, la détermination du caractère toujours présent de l'instruction modificatrice dans la deuxième mémoire prend également en compte le résultat de la comparaison de la valeur courante du bit de dépassement du compteur de lecture avec ladite valeur mémorisée du bit de dépassement du compteur d'écriture.

En ce qui concerne les instructions de transmission, selon un mode de mise en oeuvre du procédé selon l'invention, à chaque fois qu'on stocke une instruction de transmission dans la première mémoire et que l'on ne stocke pas simultanément une autre instruction dans la deuxième mémoire, on stocke simultanément dans la deuxième mémoire une instruction non-opérative (instruction NOP selon une dénomination bien connue de l'homme du métier). Par ailleurs, à chaque fois qu'on stocke une instruction de transmission, on associe à ladite instruction de transmission une "étiquette" comportant la valeur courante du compteur d'écriture qui a été mémorisée lorsque la dernière instruction modifiant l'indication de garde associée à ladite instruction de transmission a été stockée dans la deuxième mémoire. Le critère d'extraction de cette instruction de transmission ayant atteint la tête de la première mémoire, prend alors en compte le résultat de la comparaison entre ladite valeur courante mémorisée associée à cette instruction de transmission (contenue dans l'étiquette), et la valeur courante du compteur de lecture.

En d'autres termes, le principe de base est ici de comparer la valeur courante du compteur de lecture avec la valeur courante du compteur d'écriture qui a été mémorisée lorsque la dernière instruction modifiant l'indication de garde associée à cette instruction de transmission a été stockée dans la deuxième mémoire. Et, le principe de base consiste à autoriser l'extraction de l'instruction de transmission ayant atteint la tête de la mémoire lorsque la valeur courante du compteur de lecture est supérieure à la valeur courante mémorisée contenue dans l'étiquette qui a été attachée à cette instruction de transmission.

Cependant, là encore, il convient de prendre en compte notamment le cas où une instruction modificatrice est écrite alors que le compteur d'écriture est dans une fenêtre circulaire donnée et que le compteur de lecture est toujours positionné dans la fenêtre circulaire précédente.

Aussi, pour résoudre de tels cas particuliers, selon un mode de mise en oeuvre du procédé selon l'invention, à chaque fois qu'on stocke une instruction de transmission dans la première mémoire, on lui associe également dans son étiquette, la valeur courante du bit de dépassement du compteur d'écriture qui a été mémorisée lorsque la dernière instruction modifiant l'indication de garde associée à ladite instruction de transmission a été stockée dans la deuxième mémoire. Et, le critère d'extraction prend alors également en compte le résultat de la comparaison entre cette valeur courante mémorisée du bit de dépassement du compteur d'écriture, contenue dans l'étiquette attachée à cette instruction de transmission, et la valeur courante du bit de dépassement du compteur de lecture.

L'invention a également pour objet un processeur, comprenant plusieurs unités de traitement respectivement associées à des moyens de mémoire du type FIFO pour stocker séquentiellement les instructions respectives qui sont destinées aux unités correspondantes. Une première unité de traitement contient un registre d'indications de garde. Le processeur comporte par ailleurs une unité centrale apte à délivrer une instruction gardée au moyen de mémoire d'une deuxième unité de traitement, et à délivrer au moyen de mémoire de la première unité de traitement, une instruction de transmission destinée à faire transmettre à la deuxième unité de traitement la valeur de l'indication de garde associée à ladite instruction gardée.

Selon une caractéristique générale de l'invention, le moyen de mémoire de la première unité comporte une première mémoire de type FIFO, et une deuxième mémoire de type FIFO distincte de la première.

Le processeur comporte par ailleurs :
- des moyens d'aiguillage ("dispatcher" en langue anglaise) aptes à stocker chaque instruction de transmission dans la première mémoire et toutes les autres instructions destinées à la première unité de traitement dans la deuxième mémoire, et
- des moyens de commande aptes
   . à extraire de la première mémoire une instruction de transmission ayant atteint la tête de cette première mémoire si aucune instruction modificatrice temporellement plus ancienne destinée à modifier la valeur de l'indication de garde associée à cette instruction de transmission, n'est présente dans la deuxième mémoire, et
   . en présence d'une telle instruction modificatrice temporellement plus ancienne, à extraire l'instruction de transmission de la première mémoire seulement après que l'instruction modificatrice a été extraite de la deuxième mémoire.

Selon un mode de réalisation de l'invention, les moyens de commande comportent :
- un compteur de lecture incrémenté à chaque fois qu'une instruction est extraite de la deuxième mémoire,
- un compteur d'écriture incrémenté à chaque fois qu'une instruction est stockée dans la deuxième mémoire,
- un ensemble de registres élémentaires respectivement associés à l'ensemble des indications de garde,
- un premier bloc de commande apte, à chaque fois qu'une instruction modifiant la valeur d'une indication de garde est stockée dans la deuxième mémoire, à stocker la valeur courante du compteur d'écriture dans un champ principal du registre élémentaire associé à cette indication de garde,
- un deuxième bloc de commande apte à déterminer le caractère toujours présent de cette instruction modificatrice dans la deuxième mémoire, ce deuxième bloc de commande comportant des moyens de comparaison aptes à comparer le contenu dudit champ principal du registre élémentaire, avec la valeur courante du compteur de lecture.

Selon un mode de réalisation de l'invention, le compteur d'écriture et le compteur de lecture ont une taille binaire identique égale à la profondeur de la deuxième mémoire. A chaque compteur, est associé un bit de dépassement changeant de valeur à chaque fois que le compteur correspondant revient à sa valeur initiale. Chaque registre élémentaire comporte en outre un champ auxiliaire à un bit. Le premier bloc de commande est alors apte, à chaque fois qu'une instruction modifiant la valeur d'une indication de garde est stockée dans la deuxième mémoire, à stocker également la valeur courante du bit de dépassement du compteur d'écriture dans le champ auxiliaire du registre élémentaire correspondant. Le deuxième bloc de commande comporte alors des moyens de comparaison auxiliaires aptes à comparer la valeur courante du bit de dépassement du compteur de lecture avec le contenu du champ auxiliaire.

Ces moyens de comparaison auxiliaires comportent par exemple une porte logique NON OU EXCLUSIF. (XNOR en langue anglaise).

Selon un mode de réalisation de l'invention, chaque étage de la première mémoire comporte un champ utile pour le stockage d'une instruction de transmission, et un premier champ supplémentaire. (Ce premier champ supplémentaire va permettre de stocker une partie de l'étiquette attachée à l'instruction de transmission, typiquement la valeur mémorisée du compteur d'écriture).

Les moyens de commande comportent alors :
- un troisième bloc de commande apte, à chaque fois qu'une instruction de transmission est stockée dans le champ utile de l'étage d'entrée de la première mémoire, à transférer le contenu du champ principal du registre élémentaire associé à l'indication de garde correspondante, dans le premier champ supplémentaire de l'étage d'entrée de la première mémoire, et
- un quatrième bloc de commande apte à élaborer le critère d'extraction de cette instruction de transmission ayant atteint l'étage de tête de la première mémoire, ce quatrième bloc de commande comportant des moyens de comparaison aptes à comparer le contenu du premier champ supplémentaire de l'étage de tête avec la valeur courante du compteur de lecture.

Selon un mode de réalisation de l'invention, chaque étage de la première mémoire comporte en outre un deuxième champ supplémentaire. Ce deuxième champ supplémentaire, par exemple un bit supplémentaire, va permettre de stocker une autre partie de l'étiquette attachée à l'instruction de transmission, typiquement la valeur mémorisée du bit de dépassement du compteur d'écriture. Le troisième bloc de commande est alors apte, à chaque fois qu'une instruction de transmission est stockée dans le champ utile de l'étage d'entrée de la première mémoire, à transférer le contenu du champ auxiliaire du registre élémentaire associé à l'indication de garde correspondante, dans le deuxième champ supplémentaire de l'étage d'entrée de la première mémoire. Le quatrième bloc de commande comporte alors des moyens de comparaison supplémentaires aptes à comparer le contenu du deuxième champ supplémentaire avec la valeur courante du bit de dépassement du compteur de lecture.

Là encore, ces moyens de comparaison supplémentaires peuvent comporter une porte logique NON OU EXCLUSIF. (XNOR).

D'autres avantages et caractéristiques de l'invention apparaîtront à l'examen de la description détaillée de modes de mise en oeuvre et de réalisation, nullement limitatifs, et des dessins annexés, sur lesquels :
- la figure 1 illustre schématiquement l'architecture générale d'un processeur selon l'invention;
- la figure 2 illustre plus en détail mais toujours schématiquement le coeur du processeur de la figure 1;
- la figure 3 illustre plus en détail mais toujours schématiquement une architecture permettant une gestion des instructions gardées selon l'invention; et
- les figures 4 à 7 illustrent schématiquement des organigrammes relatifs à des modes de mise en oeuvre du procédé de gestion d'instructions gardées selon l'invention.

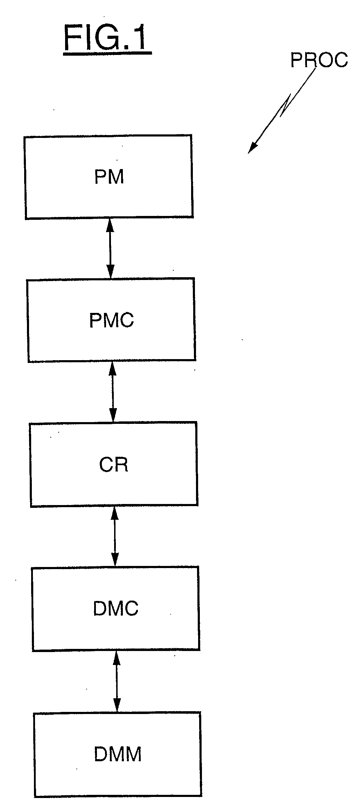

Sur la figure 1, la référence PROC désigne un processeur, par exemple un processeur de traitement numérique du signal.

Le processeur PROC comporte une mémoire-programme PM contenant les instructions de programme. Cette mémoire-programme est adressée par un contrôleur de mémoire PMC qui coopère avec le coeur CR du processeur.

Le coeur CR du processeur dialogue également avec un contrôleur de mémoire DMC qui contrôle l'accès à une mémoire de données DMM, par exemple deux bancs de mémoire SRAM.

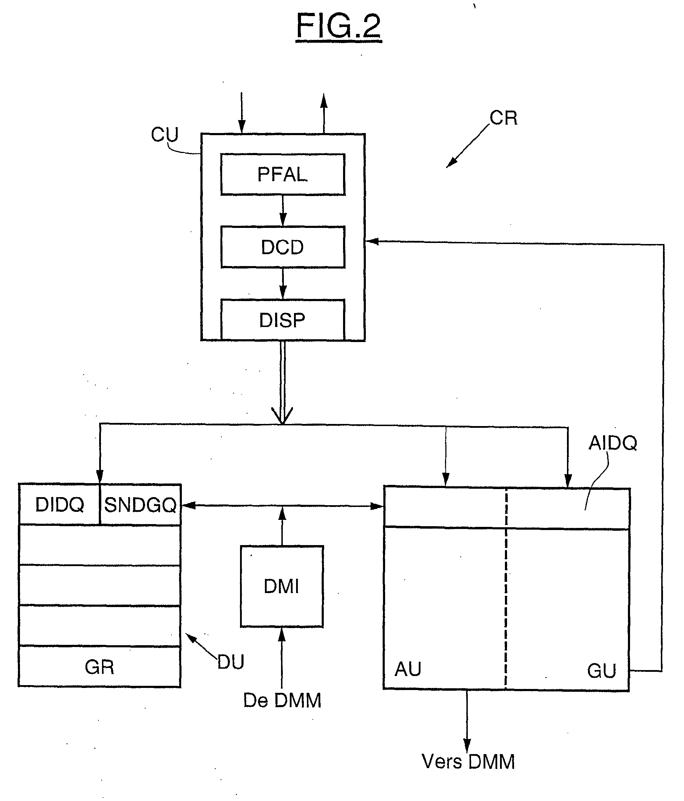

Sur la figure 2, on voit que le coeur CR du processeur comporte une unité centrale CU et plusieurs unités de traitement, ici trois unités de traitement distinctes DU, AU et GU.

L'unité centrale CU est l'unité maîtresse du système. En général, elle gère toutes les activités de commande. Plus particulièrement, elle délivre au contrôleur de mémoire PMC des adresses programme, et répartit les instructions correspondantes vers les différentes unités de traitement. Plus précisément, l'unité centrale CU comporte une interface PFAL avec le contrôleur de mémoire PMC, qui effectue notamment un formatage des instructions en instructions prêtes à être décodées. Les instructions sont décodées ensuite dans un décodeur DCD qui transforme chaque instruction machine en une ou plusieurs micro-instructions qui pourront être traitées par les différentes unités de traitement. Dans la suite du texte, à des fins de simplification, on désigne sous le vocable "d'instruction" une micro-instruction.

Enfin, un moyen d'aiguillage DISP ("Dispatcher" en langue anglaise) envoie les instructions générées par le décodeur aux unités de traitement auxquelles sont destinées ces instructions.

Les unités de traitement du coeur de processeur comportent ici une unité arithmétique et logique DU qui exécute la plupart des opérations arithmétiques.

Il est par ailleurs prévu une unité d'adressage AU qui effectue les calculs d'adresses effectives nécessaires pour adresser les opérandes dans la mémoire. Cette unité AU contient tous les registres nécessaires à cette tâche.

Une troisième unité de traitement est une unité de branchement GU qui effectue tous les calculs de branchement d'adresse et les transfère à l'unité centrale CU.

L'unité de traitement DU comporte un moyen de mémoire du type FIFO composé, comme on le verra plus en détail ci-après, d'une première mémoire SNDGQ destinée à stocker des instructions de transmission et une deuxième mémoire DIDQ destinée à stocker toutes les autres instructions destinées à cette unité DU, en particulier des instructions modificatrices destinées à modifier des valeurs d'indication de garde.

Outre ces unités DU, AU et GU, il est prévu une interface mémoire DMI qui contient notamment une autre mémoire du type FIFO destinée à recevoir et à stocker temporairement les données contenues dans les bancs de mémoire SRAM.

Par ailleurs, au même titre que l'unité DU comporte un moyen de mémoire du type FIFO, chaque autre unité de traitement, à savoir l'unité AU et l'unité GU, contient également un moyen de mémoire du type FIFO, référencé AIDQ, et destiné à stocker les instructions destinées à ces unités de traitement.

Par ailleurs, l'une des unités de traitement, par exemple l'unité DU, comporte un registre des indications de garde GR. Ce registre stocke les valeurs courantes de toutes les indications de garde, qui sont par exemple au nombre de seize.

On rappelle ici qu'une instruction peut être gardée. Ceci signifie que cette instruction est affectée d'une indication de garde, prise parmi les seize indications de garde du registre GR, et, en fonction de la valeur de cette indication de garde, l'instruction sera ou non exécutée.

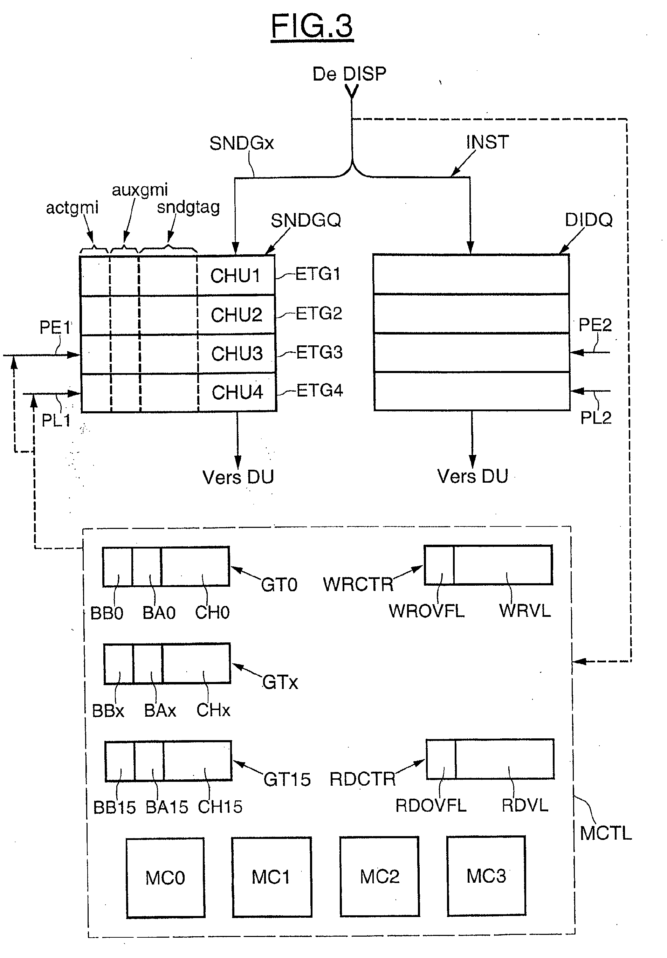

On se réfère maintenant plus particulièrement à la figure 3, pour décrire le mécanisme selon l'invention de gestion de ces instructions gardées.

Lorsqu'une instruction gardée est délivrée au moyen de mémoire AIDQ d'une unité de traitement, par exemple l'unité AU ou l'unité GU, qui ne détient pas le registre d'indications de garde GR, cette délivrance provoque la délivrance au moyen de mémoire de l'unité de traitement DU, qui contient le registre des indications de garde, d'une instruction dite "de transmission" destinée à faire transmettre à l'unité AU ou GU la valeur de l'indication de garde associée à ladite instruction gardée qui a été délivrée à l'unité AU ou GU.

Sur la figure 3, la référence SNDGx désigne une telle instruction de transmission, et x désigne le numéro de l'indication de garde Gx associée à l'instruction gardée qui a été délivrée à l'une des unités AU ou GU.

Comme indiqué ci-avant, le moyen de mémoire associé à l'unité DU comporte une première mémoire du type FIFO, référencée SNDGQ, et une deuxième mémoire du type FIFO, référencée DIDQ.

Cette première mémoire SNDGQ comporte plusieurs étages (ici quatre), référencés ETG1-ETG4. Chaque étage ETGi comporte un champ utile CHUi pour le stockage d'une instruction de transmission SNDGx. L'écriture et la lecture dans la première mémoire SNDGQ sont gérées par un pointeur d'écriture PE1 et un pointeur de lecture PL1. Une instruction de transmission SNDGx qui aurait été stockée dans l'étage ETG1, va alors se propager séquentiellement depuis l'étage d'entrée ETG1 de la mémoire jusqu'à l'étage de sortie ETG4, ou étage de tête, de la mémoire SNDGQ. Bien entendu si à un instant donné, la FIFO est partiellemnt remplie ou vide, une instruction pourra être stockée directement au premier étage disponible, par exemple ETG2, ou ETG3 ou bien ETG4, comme cela est bien connu de l'homme du métier. Ainsi au sens de la présente invention l'étage d'entrée n'est donc pas nécéssairement l'étage ETG1.

La deuxième mémoire DIDQ est destinée à stocker toutes les autres instructions INST destinées à l'unité DU, et notamment des instructions dites "modificatrices", c'est-à-dire destinées à modifier la valeur d'une indication de garde stockée dans le registre des indications de garde GR. Une instruction modificatrice destinée à modifier la valeur de l'indication de garde portant le numéro x, est référencée dans la suite du texte par GMIx.

L'écriture et la lecture dans cette deuxième mémoire DIDQ sont gérées également de façon classique par un pointeur d'écriture PE2 et un pointeur de lecture PL2. Les deux mémoires SNDGQ et DIDQ ont, dans l'exemple décrit ici, la même profondeur (taille) égale à quatre. Il convient également de noter que les pointeurs PE1 et PL1 associés à la mémoire SNDGQ sont décorrélés (c'est-à-dire commandés de façon indépendante) par rapport aux pointeurs PE2 et PL2 associés à la mémoire DIDQ.

Outre ces deux mémoires de type FIFO, le processeur comporte des moyens de contrôle MCTL, par exemple incorporés au sein de l'unité DU. Ces moyens de contrôle vont permettre, comme on va le voir plus en détail ci-après, de délivrer les instructions de transmission SNDGx beaucoup plus rapidement aux étages d'exécution pipelinés de l'unité DU, et par conséquent au registre des indications de garde GR, de façon à permettre la délivrance de la valeur de l'indication de garde associée à l'instruction gardée qui est en attente d'exécution dans le moyen de mémoire associé à une autre unité de traitement, par exemple l'unité GU.

Plus précisément, ces moyens de commande MCTL vont extraire de la mémoire SNDGQ une instruction de transmission SNDGx ayant atteinte la tête ETG4 de cette mémoire SNDGQ, si aucune instruction GMIx temporellement plus ancienne destinée à modifier la valeur de l'indication de garde Gx associée à cette instruction de transmission SNDGx, n'est présente dans la mémoire DIDQ.

Et, ces moyens de commande MCTL vont, en présence d'une telle instruction modificatrice GMIx temporellement plus ancienne stockée dans la deuxième mémoire DIDQ, extraire l'instruction de transmission SNDGx dès que l'instruction modificatrice GMIx a été extraite de la mémoire DIDQ.

Dans un mode de réalisation, tel que celui illustré sur la figure 3, les moyens de commande MCTL comportent un compteur de lecture RDCTR, circulaire, incrémenté à chaque fois qu'une instruction, quelle qu'elle soit, est extraite de la deuxième mémoire DIDQ.

Les moyens MCTL comportent par ailleurs un compteur d'écriture WRCTR, circulaire, incrémenté à chaque fois qu'une instruction, quelle qu'elle soit, est stockée dans la deuxième mémoire DIDQ.

Dans l'exemple décrit ici, les deux compteurs ont une taille identique. Cette taille identique est un nombre de bits nécessaire à coder en binaire la profondeur de la deuxième mémoire DIDQ. Dans l'exemple illustré, puisque la mémoire DIDQ a une profondeur de quatre, les compteurs sont des compteurs sur deux bits, c'est-à-dire que la valeur courante WRVL du compteur d'écriture WRCTR et la valeur courante RDVL du compteur de lecture RDCTR sont des mots de deux bits. Bien entendu la profondeur de la FIFO peut être plus importante.

Par ailleurs, à chaque compteur est associé un bit de dépassement (WROVFL pour le compteur d'écriture et RDOVFL pour le compteur de lecture). Ce bit de dépassement change de valeur à chaque fois que le compteur correspondant revient à sa valeur initiale. En d'autres termes, au rythme des fenêtres circulaires successives de comptage, le bit de dépassement prend successivement les valeurs 0 et 1.

Outre le compteur d'écriture et le compteur de lecture, les moyens de commande MCTL comportent un ensemble de registres élémentaires GT0-GT15, respectivement associés à l'ensemble des indications de garde G0-G15. Ainsi, le registre élémentaire GTx est associé à l'indication de garde Gx portant le numéro x.

Chaque registre élémentaire GTx comporte un champ principal CHx, ainsi qu'un premier champ auxiliaire BAx et un deuxième champ auxiliaire BBx. On reviendra plus en détail sur la signification et la fonction de ces champs auxiliaires qui, dans l'exemple décrit ici, sont des champs à un bit.

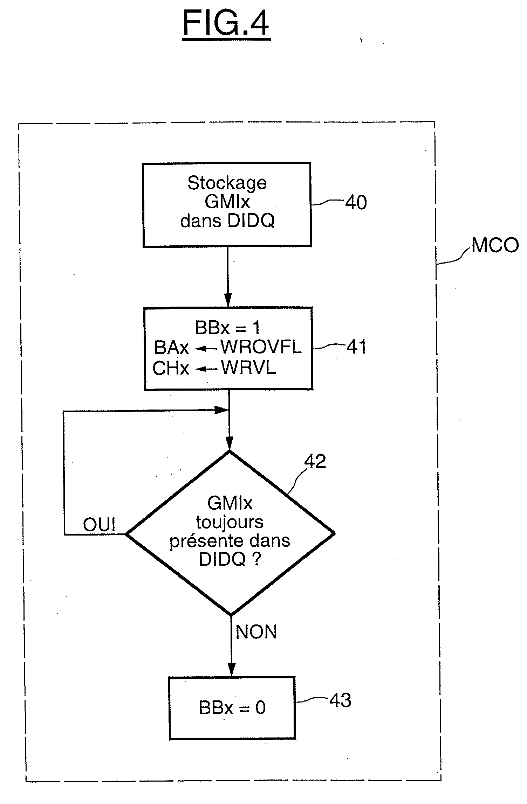

Les moyens de commande MCTL comportent, par ailleurs, quatre blocs de commande MCO-MC3 dont on va maintenant décrire plus en détail la fonctionnalité en se référant aux figures 4 et suivantes.

Le premier bloc de commande MC0 est apte, à chaque fois qu'une instruction GMIx modifiant la valeur de l'indication de garde Gx, est stockée dans la deuxième mémoire DIDQ (étape 40, figure 4), à stocker la valeur courante WRVL du compteur d'écriture WRCTR dans le champ principal CHx du registre élémentaire GTx associé à l'indication de garde Gx. Par ailleurs, le bit BBx (deuxième champ auxiliaire) du registre élémentaire GTx, initialement à 0, prend la valeur 1 pour indiquer qu'une instruction modificatrice GMIx a été effectivement stockée dans la mémoire DIDQ (étape 41).

Enfin, la valeur courante du bit de dépassement WROVFL du compteur d'écriture est stockée dans le premier champ auxiliaire (un bit) BAx du registre élémentaire GTx.

En fait, la valeur stockée dans le champ principal CHx du registre élémentaire GTx, dont la taille en bit est égale à la profondeur de la deuxième mémoire (ici deux bits), représente la position "symbolique" de la dernière instruction modificatrice GMIx écrite dans la mémoire DIDQ. Le premier champ auxiliaire BAx, destiné à recevoir la valeur courante du bit de dépassement du compteur d'écriture, permet de prendre en compte et de gérer les positions éventuelles respectives des pointeurs dans des fenêtres circulaires de comptage différentes.

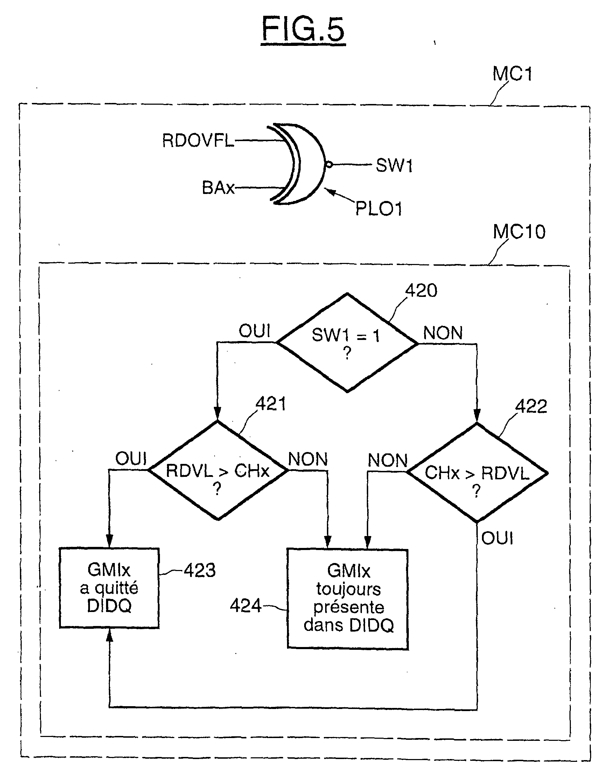

Dans l'étape 42, on va maintenant déterminer si l'instruction modificatrice GMIx est toujours présente dans la mémoire DIDQ, ou bien si elle a quitté cette mémoire. Ceci est effectué par le deuxième bloc de commande MC1 et va maintenant être décrit plus en détail en se référant plus particulièrement à la figure 5.

Basiquement, le deuxième bloc de commande MC1 comporte des moyens de comparaison MC10 qui vont comparer le contenu du champ principal CHx du registre élémentaire GTx avec la valeur courante RDVL du compteur de lecture. Cette comparaison va permettre de déterminer si l'instruction GMIx est toujours présente ou a quitté la mémoire DIDQ.

Ceci étant, afin de prendre en compte les effets des fenêtres circulaires de comptage, il est prévu que le deuxième bloc de commande MC1 comporte également des moyens de comparaison auxiliaires, formés ici d'une première porte logique NON OU EXCLUSIF (XNOR),référencée PLO1. Cette porte logique est destinée à élaborer un premier signal logique SW1 à partir du contenu du premier champ auxiliaire BAx et de la valeur du bit de dépassement RDOVFL du compteur de lecture.

En d'autres termes, ce signal logique SW1 indique si le pointeur de lecture PL2 est dans la même fenêtre circulaire que la position de la dernière instruction GMIx affectant l'indication de garde Gx.

On teste alors, dans l'étape 420, la valeur du premier signal logique SW1. Si ce signal logique est à 0, on teste, dans l'étape 422, si la valeur du mot contenu dans le champ principal CHx est strictement supérieure à la valeur courante RDVL du compteur de lecture. Si tel est le cas, alors cela signifie que l'instruction GMIx a quitté la mémoire DIDQ (étape 423) et on met alors le bit BBx à 0 (étape 43, figure 4).

Si, par contre, la valeur du mot contenu dans le champ principal CHx n'est pas strictement supérieure à la valeur courante RDVL du compteur de lecture, alors cela signifie que l'instruction modificatrice GMIx est toujours présente dans la mémoire DIDQ (étape 424). Dans ce cas, le bit BBx est maintenu à 1.

Si, par contre, dans l'étape 420, le signal logique SW1 est à 1, les moyens de comparaison MC10 vont tester si la valeur courante du compteur de lecture RDVL est strictement supérieure au mot contenu dans le champ principal CHx du registre élémentaire GTx (étape 421).

Si tel est le cas, cela signifie que l'instruction modificatrice GMIx a quitté la mémoire DIDQ (étape 423). Dans ce cas, le bit BBx est mis à 0 (étape 43, figure 4).

Dans le cas contraire, cela signifie (étape 424) que l'instruction modificatrice GMIx est toujours présente dans la mémoire DIDQ.

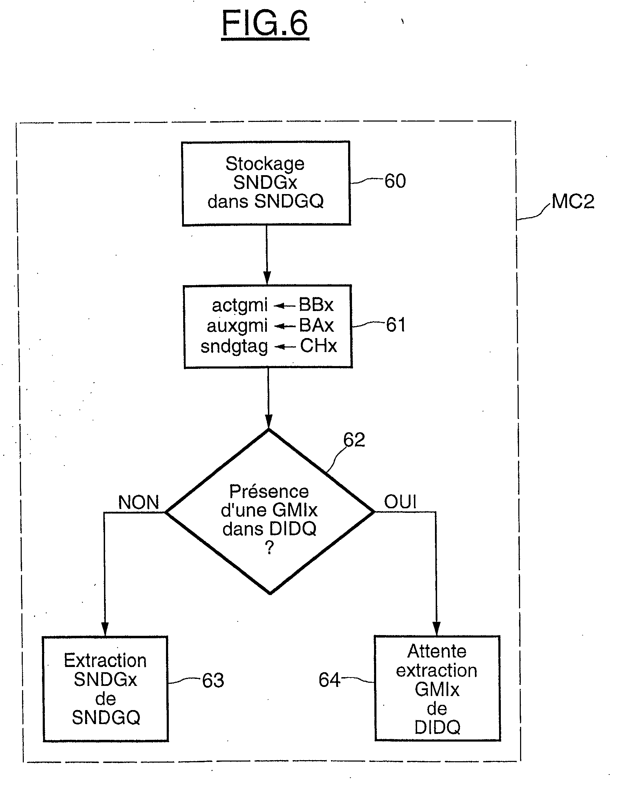

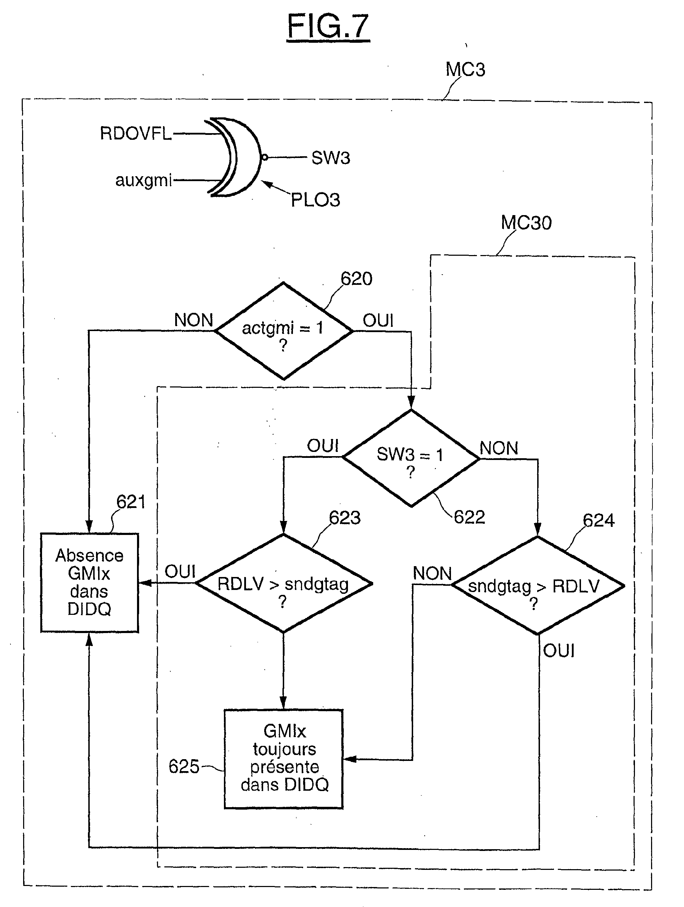

On va maintenant décrire plus en détail, en se référant plus particulièrement aux figures 6 et 7, les traitements effectués lorsqu'une instruction de transmission SNDGx est stockée dans le champ utile CHU1 de l'étage d'entrée ETG1 de la mémoire SNDGQ, ainsi que l'élaboration de son critère d'extraction, lorsque cette instruction de transmission SNDGx a atteint la tête de la mémoire SNDGQ, c'est-à-dire lorsqu'elle est présente dans le champ utile CHU4 de l'étage de sortie ETG4.

Afin de ne pas perturber le bon synchronisme temporel des traitements, à chaque fois qu'une instruction de transmission SNDGx est stockée dans la mémoire SNDGQ et que l'on ne stocke pas une autre instruction dans la mémoire DIDQ, on stocke également dans la mémoire DIDQ une instruction non-opérative NOP. Comme cela est connu de l'homme du métier, une instruction NOP ne modifie pas le contenu des registres architecturaux du coeur de processeur.

Par ailleurs, à chaque fois qu'une instruction de transmission SNDGx est stockée dans la mémoire SNDGQ, par exemple dans le champ utile CHU1 de l'étage ETG1, on lui associe une étiquette qui correspond au contenu du registre élémentaire GTx correspondant.

Et, cette étiquette va continuellement être attachée à l'instruction de transmission SNDGx dans la mémoire SNDGQ.

En pratique (figure 3), l'étiquette associée à une instruction de transmission SNDGx est formée dans chaque étage de la mémoire SNDGQ par
- un premier champ supplémentaire Sndgtag,
- un deuxième champ supplémentaire (1 bit) Auxgmi, et
- un deuxième champ supplémentaire (1 bit également) Actgmi.

Lorsqu'une instruction de transmission SNDGx est stockée dans l'étage de tête de la mémoire SNDGQ (étape 60, figure 6), le troisième bloc de commande MC2 transfère (étape 61, figure 6)
- le contenu du champ principal CHx dans le premier champ supplémentaire Sndgtag,
- le contenu du premier champ auxiliaire BAx dans le deuxième champ supplémentaire Auxgmi, et,
- le contenu du deuxième champ auxiliaire BBx dans le troisième champ supplémentaire Actgmi.

Et, le contenu de cette étiquette va rester inchangé lors de la propagation de l'instruction SNDGx à laquelle elle est rattachée, jusqu'à ce que cette instruction atteigne la tête de la mémoire SNDGQ.

A ce moment-là, le quatrième bloc de commande MC3 va tester (étape 62) la présence ou l'absence d'une instruction modificatrice GMIx temporellement plus ancienne dans la mémoire DIDQ.

Si une instruction modificatrice GMIx est présente, alors le troisième bloc de commande MC2 va attendre, pour extraire l'instruction de transmission de la mémoire SNDGQ, que l'instruction modificatrice GMIx ait été extraite de la mémoire DIDQ (étape 64).

Si, par contre, aucune instruction GMIx n'est détectée dans la mémoire DIDQ, le troisième bloc de commande MC2 va extraire immédiatement l'instruction de transmission SNDGx de la tête de la mémoire SNDQ (étape 63).

Et, c'est le quatrième bloc de commande MC3 qui va élaborer le critère d'extraction de cette instruction de transmission SNDGx ayant atteint la tête de la première mémoire.

Pour déterminer si une instruction modificatrice GMIx est présente dans la mémoire DIDQ, le bloc MC3 va tout d'abord tester la valeur du bit Actgmi de l'étiquette attachée à l'instruction de transmission SNDGx (étape 620, figure 7).

Si ce bit Actgmi est égal à 0, alors cela signifie qu'aucune instruction GMIx temporellement plus ancienne que l'instruction SNDGx n'est présente dans la mémoire DIDQ (étape 621). Dans ce cas, l'instruction de transmission SNDGx peut être immédiatement extraite de la mémoire SNDGQ (étape 63, figure 6).

Si, par contre, le bit Actgmi est à 1, alors il convient basiquement de comparer le contenu du premier champ supplémentaire Sndgtag avec la valeur courante RDVL du compteur de lecture. C'est le rôle des moyens de comparaison MC30.

Et, basiquement, une absence d'instruction GMIx se traduira par une valeur RDVL strictement supérieure au premier champ supplémentaire Sndgtag.

Ceci étant, là encore, il convient de prendre en compte les effets des fenêtres circulaires de comptage.

C'est la raison pour laquelle il est prévu que le bloc de commande MC3 comporte des moyens de comparaison supplémentaires, formés ici d'une deuxième porte logique NON OU EXCLUSIF, référencée PL03, et apte à comparer le bit Auxgmi avec le bit de dépassement RDOVFL du compteur de lecture. Le résultat de cette comparaison fournit un deuxième signal logique SW3.Ce signal SW3 indique si le pointeur de lecture PL2 de la deuxième mémoire DIDQ est dans la même fenêtre circulaire que la position de la dernière instruction modificatrice GMIx, ayant potentiellement un effet sur l'instruction de transmission SNDGx.

Si le signal SW3 est à 1, alors l'instruction de transmission SNDGx pourra être transmise si la valeur RDVL est supérieure à Sndgtag (étape 623, figure 7).

Dans le cas contraire, cela signifie qu'une instruction GMIx est toujours présente dans la deuxième mémoire DIDQ (étape 625). Et, il convient d'attendre avant d'extraire l'instruction de transmission SNDGx de la tête de la mémoire SNDGQ.

Si le signal SW3 est à 0, alors on pourra extraire l'instruction de transmission SNDGx si la valeur du mot Sndgtag est strictement supérieure à la valeur du compteur de lecture RDVL (étape 624).

Dans le cas contraire, il conviendra d'attendre (étape 625).

Matériellement, les différents blocs de commande MC0-MC3 peuvent être réalisés sous la forme d'un circuit intégré en utilisant des outils de synthèse logique.

Le mode de réalisation qui vient d'être décrit permet une mise en oeuvre très simple du procédé selon l'invention. Il convient de noter également que la profondeur de la première mémoire SNDGQ peut être différente de celle de la deuxième mémoire DIDQ.

Par ailleurs tout ce qui vient d'être décrit pour une indication de garde Gx, est effectué en réalité en parallèle simultanément pour toutes les indications de garde.

## Revendications

1. Procédé de gestion d'instructions gardées au sein d'un processeur, le processeur comportant plusieurs unités de traitement (DU, AU, GU) respectivement associées à des moyens de mémoire du type FIFO pour stocker séquentiellement les instructions respectives qui sont destinées aux unités correspondantes, une première unité (DU) contenant un registre d'indications de garde (GR), procédé dans lequel la délivrance d'une instruction gardée au moyen de mémoire (AIDQ) d'une deuxième unité de traitement (GU), provoque la délivrance au moyen de mémoire de la première unité de traitement (DU), d'une instruction de transmission (SNDGx) destinée à faire transmettre à la deuxième unité (GU) la valeur de l'indication de garde (Gx) associée à ladite instruction gardée, **caractérisé par le fait que** le moyen de mémoire de la première unité comporte une première mémoire de type FIFO (SNDGQ), et une deuxième mémoire de type FIFO (DIDQ) distincte de la première, **par le fait qu'**on stocke chaque instruction de transmission (SNDGx) dans la première mémoire (SNDGQ) et toutes les autres instructions (INST) destinées à la première unité (DU) dans la deuxième mémoire (DIDQ), **par le fait qu'**on extrait de la première mémoire (SNDGQ) une instruction de transmission (SNDGx) ayant atteint la tête (ETG4) de cette première mémoire si aucune instruction modificatrice (GMIx) temporellement plus ancienne destinée à modifier la valeur de l'indication de garde (Gx) associée à cette instruction de transmission (SNDGx), n'est présente dans la deuxième mémoire (DIDQ), et **par le fait qu'**en présence d'une telle instruction modificatrice (GMIx) temporellement plus ancienne, on extrait l'instruction de transmission (SNDGx) de la première mémoire (SNDGQ) seulement après que l'instruction modificatrice (GMIx) a été extraite de la deuxième mémoire (DIDQ).

2. Procédé selon la revendication 1, **caractérisé par le fait qu'**à chaque fois qu'on extrait une instruction (INST) de la deuxième mémoire (DIDQ), on incrémente un compteur de lecture (RDCTR), **par le fait qu'**à chaque fois qu'on stocke une instruction (INST) dans la deuxième mémoire (DIDQ), on incrémente un compteur d'écriture (WRCTR), **par le fait qu'**à chaque fois qu'on stocke dans la deuxième mémoire (DIDQ) une instruction (GMIx) modifiant la valeur d'une indication de garde (Gx), on mémorise la valeur courante (WRVL) du compteur d'écriture, et **par le fait que** la détermination du caractère toujours présent de cette instruction modificatrice (GMIx) dans la deuxième mémoire prend en compte la comparaison de ladite valeur courante mémorisée du compteur d'écriture avec la valeur courante du compteur de lecture (RDVL).

3. Procédé selon la revendication 2, **caractérisé par le fait que** le compteur d'écriture (WRCTR) et le compteur de lecture (RDCTR) ont une taille identique égale à la profondeur de la deuxième mémoire (DIDQ), **par le fait qu'**on associe à chaque compteur un bit de dépassement (WROVFL, RDOVFL) changeant de valeur à chaque fois que le compteur correspondant revient à sa valeur initiale, **par le fait qu'**à chaque fois qu'on stocke dans la deuxième mémoire une instruction (GMIx) modifiant la valeur d'une indication de garde, on mémorise également la valeur courante du bit de dépassement (WROVFL) du compteur d'écriture, et **par le fait que** la détermination du caractère toujours présent de cette instruction modificatrice (GMIx) dans la deuxième mémoire prend également en compte la comparaison de la valeur courante du bit de dépassement (RDOVFL) du compteur de lecture avec ladite valeur mémorisée du bit de dépassement du compteur d'écriture.

4. Procédé selon la revendication 2 ou 3, **caractérisé par le fait qu'**à chaque fois qu'on stocke une instruction de transmission (SNDGx) dans la première mémoire (SNDGQ) sans stocker simultanément une autre. instruction dans la deuxième mémoire (DIDQ), on stocke simultanément dans la deuxième mémoire (DIDQ) une instruction non-opérative (NOP), **par le fait qu'**à chaque fois qu'on stocke une instruction de transmission, on associe à ladite instruction de transmission (SNDGx) une étiquette contenant la valeur courante du compteur d'écriture qui a été mémorisée lorsque la dernière instruction (GMIx) modifiant l'indication de garde (Gx) associée à ladite instruction de transmission a été stockée dans la deuxième mémoire, et **par le fait que** le critère d'extraction de cette instruction de transmission (SNDGx) ayant atteint la tête (ETG4) de la première mémoire (SNDGQ) prend en compte le résultat de la comparaison entre ladite valeur courante mémorisée associée à cette instruction de transmission, et la valeur courante du compteur de lecture (RDVL).

5. Procédé selon les revendications 3 et 4, **caractérisé par le fait qu'**à chaque fois qu'on stocke une instruction de transmission dans la première mémoire, on lui associe également dans son étiquette la valeur courante du bit de dépassement du compteur d'écriture qui a été mémorisée lorsque la dernière instruction (GMIx) modifiant l'indication de garde associée à ladite instruction de transmission a été stockée dans la deuxième mémoire, et **par le fait que** le critère d'extraction de cette instruction de transmission ayant atteint la tête de la première mémoire prend également en compte le résultat de la comparaison entre cette valeur courante mémorisée associée à cette instruction de transmission et la valeur courante du bit de dépassement (RDOVFL) du compteur de lecture.

6. Processeur, comprenant plusieurs unités de traitement (DU, AU, GU) respectivement associées à des moyens de mémoire du type FIFO pour stocker séquentiellement les instructions respectives qui sont destinées aux unités correspondantes, une première unité (DU) contenant un registre d'indications de garde (GR), et une unité centrale (CU) apte à délivrer une instruction gardée au moyen de mémoire d'une deuxième unité de traitement (GU), et à délivrer au moyen de mémoire de la première unité de traitement (DU), une instruction de transmission (SNDGx) destinée à faire transmettre à la deuxième unité la valeur de l'indication de garde (Gx) associée à ladite instruction gardée, **caractérisé par le fait que** le moyen de mémoire de la première unité comporte une première mémoire de type FIFO (SNDGQ), et une deuxième mémoire de type FIFO (DIDQ) distincte de la première, et **par le fait que** le processeur comporte
des moyens d'aiguillage (DISP) aptes à stocker chaque instruction de transmission (SNDGx) dans la première mémoire et toutes les autres instructions (INST) destinées à la première unité (DU) dans la deuxième mémoire, et
des moyens de commande (MCTL) aptes
à extraire de la première mémoire (SNDGQ) une instruction de transmission (SNDGx) ayant atteint la tête (ETG4) de cette première mémoire si aucune instruction modificatrice (GMIx) temporellement plus ancienne destinée à modifier la valeur de l'indication de garde associée à cette instruction de transmission, n'est présente dans la deuxième mémoire (DIDQ), et
en présence d'une telle instruction modificatrice (GMIx) temporellement plus ancienne, à extraire l'instruction de transmission de la première mémoire (SNDGQ) seulement après que l'instruction modificatrice (GMIx) a été extraite de la deuxième mémoire (DIDQ).

7. Processeur selon la revendication 6, **caractérisé par le fait que** les moyens de commande (MCTL) comportent
un compteur de lecture (RDCTR) incrémenté à chaque fois qu'une instruction est extraite de la deuxième mémoire,
un compteur d'écriture (WRCTR) incrémenté à chaque fois qu'une instruction est stockée dans la deuxième mémoire,
un ensemble de registres élémentaires (GT0-GT15) respectivement associés à l'ensemble des indications de garde (G0-G15),
un premier bloc de commande (MC0) apte, à chaque fois qu'une instruction (GMIx) modifiant la valeur d'une indication de garde (Gx) est stockée dans la deuxième mémoire, à stocker la valeur courante (WRVL) du compteur d'écriture dans un champ principal (CHx) du registre élémentaire (GTx) associé à cette indication de garde,
un deuxième bloc de commande (MC1) apte à déterminer le caractère toujours présent de cette instruction modificatrice (GMIx) dans la deuxième mémoire, et comportant des moyens de comparaison (MC10) aptes à comparer le contenu du champ principal (CHx) du registre élémentaire (GTx), avec la valeur courante (RDVL) du compteur de lecture.

8. Processeur selon la revendication 7, **caractérisé par le fait que** le compteur d'écriture et le compteur de lecture ont une taille identique égale à la profondeur de la deuxième mémoire (DIDQ), **par le fait qu'**à chaque compteur est associé un bit de dépassement (WROVFL, RDOVFL) changeant de valeur à chaque fois que le compteur correspondant revient à sa valeur initiale, **par le fait que** chaque registre élémentaire (GTx) comporte en outre un champ auxiliaire à un bit (BAx), **par le fait que** le premier bloc de commande (MC0) est apte, à chaque fois qu'une instruction (GMIx) modifiant la valeur d'une indication de garde est stockée dans la deuxième mémoire, à stocker également la valeur courante du bit de dépassement (WROVFL) du compteur d'écriture dans le champ auxiliaire (BAx) du registre élémentaire correspondant, et **par le fait que** le deuxième bloc de commande (MCI) comporte des moyens de comparaison auxiliaires (PLO1) aptes à comparer la valeur courante du bit de dépassement (RDOVFL) du compteur de lecture avec le contenu du champ auxiliaire (BAx).

9. Processeur selon la revendication 8, **caractérisé par le fait que** les moyens de comparaison auxiliaires comportent une porte logique NON OU EXCLUSIF (PLO1).

10. Processeur selon l'une des revendications 7 à 9, **caractérisé par le fait que** chaque étage (ETGi) de la première mémoire (SNDGQ) comporte un champ utile (CHUi) pour le stockage d'une instruction de transmission (SNDGx), et un premier champ supplémentaire (Sndgtag), **par le fait que** les moyens de commande (MCTL) comportent
un troisième bloc de commande (MC2) apte, à chaque fois qu'une instruction de transmission est stockée dans le champ utile (CHU1) de l'étage d'entrée de la première mémoire, à transférer le contenu du champ principal (CHx) du registre élémentaire (GTx) associé à l'indication de garde correspondante (Gx), dans le premier champ supplémentaire (Sndgtag) de l'étage d'entrée de la première mémoire, et
un quatrième bloc de commande (MC3) apte à élaborer le critère d'extraction de cette instruction de transmission ayant atteint l'étage de tête (ETG4) de la première mémoire, et comportant des moyens de comparaison (MC30) aptes à comparer le contenu dudit premier champ supplémentaire (Sndgtag) de l'étage de tête avec la valeur courante (RDVL) du compteur de lecture.

11. Processeur selon la revendication 10 prise en combinaison avec la revendication 8 ou 9, **caractérisé par le fait que** chaque étage de la première mémoire comporte en outre un deuxième champ supplémentaire (Auxgmi), **par le fait que** le troisième bloc de commande (MC2) est apte, à chaque fois qu'une instruction de transmission est stockée dans le champ utile (CHU1) de l'étage d'entrée de la première mémoire, à transférer le contenu du champ auxiliaire (BAx) du registre élémentaire (GTx) associé à l'indication de garde correspondante (Gx), dans le deuxième champ supplémentaire (Auxgmi) de l'étage d'entrée de la première mémoire, et **par le fait que** le quatrième bloc de commande (MC3) comportent des moyens de comparaison supplémentaires (PLO3) aptes à comparer le contenu du deuxième champ supplémentaire (Auxgmi) avec la valeur courante du bit de dépassement (RDOVFL) du compteur de lecture.

12. Processeur selon la revendication 11, **caractérisé par le fait que** les moyens de comparaison supplémentaires comportent une porte logique NON OU EXCLUSIF. (PLO3).
